# EUROPEAN PATENT SPECIFICATION

(11) **EP 2 569 370 B1**
(45) Date of publication and mention of the grant of the patent: **24.08.2016**
(21) Application number: 11718754.2
(22) Date of filing: 11.05.2011
(51) Int. Cl.: C08L 23/22

(54) **EMULSIONS OF POLYISOBUTENES, SUBSTANCE AND PROCESS**
POLYISOBUTENEMULSIONEN, STOFF UND VERFAHREN
ÉMULSIONS DE POLYISOBUTÈNES, SUBSTANCE, ET PROCÉDÉ

(30) Priority: 12.05.2010 US 333786 P
(43) Date of publication of application: 20.03.2013
(60) Divisional application: 12190025.2
(73) Proprietor: BASF SE, 67056 Ludwigshafen am Rhein (DE)
(72) Inventor: BOECKH, Dieter, 67117 Limburgerhof (DE); MÜHLBACH, Klaus, 67269 Grünstadt (DE); BRYM, Markus, 68163 Mannheim (DE); EBERT, Sophia, 68165 Mannheim (DE); GARCIA CASTRO, Ivette, 67067 Ludwigshafen (DE); TINSLEY, Jack, 68161 Mannheim (DE); DOBRAWA, Rainer, 70469 Stuttgart (DE); CEPUS, Valentin, 61479 Glashütten (DE); PANANDIKER, Rajan K., West Chester OH 45069 (US); MENKHAUS, Julie, Cleves OH 45002 (US); HUELSKOETTER, Frank, 67098 Bad Dürkheim (DE)
(86) International application number: PCT/EP2011/057586
(87) International publication number: WO 2011/141496

(56) References cited:
- WO-A1-2010/030033
- DE-A1-102005 049 327
- FR-A1- 2 733 508
- US-A1- 2004 154 216
- US-A1- 2008 221 257
- US-A1- 2008 274 073

## Description

The present invention is directed to stable emulsions comprising polyolefins, in particular polyisobutene, the process to obtain said emulsions and the use of said emulsions.

Polyolefins and in particular polyisobutene(s) are useful ingredients in a lot of technical applications. It is, however, still difficult to obtain stable emulsions comprising such polyolefin(s) and water. There is always a need to add either surfactant or huge amounts of additional polymer, see e.g. DE19505100, WO2007/014915 (Aqueous dispersions and their use) and WO2007/042454 (Process for producing aqueous emulsions and dispersions)

WO2010/030033A1 (D2) describes an aqueous emulsion which includes (A) an olefinic copolymer which includes a structural unit derived from ethylene and/or a straight chain α-olefin, and a structural unit derived from a vinyl compound of the formula CH₂=CH-R, in which, R represents a secondary alkyl group, a tertiary alkyl group or an alicyclic hydrocarbon group, or a polymer obtained by graft polymerizing an α,β-unsaturated carboxylic acid anhydride to said olefinic copolymer, (B) an acrylic resin containing a structural unit derived from an α,β-unsaturated carboxylic acid and a structural unit derived from an α,β-unsaturated carboxylic acid ester, and (C) water.

FR2733508A1 (D4) describes an adhesive composition that contains (a) at least one hydrocolloid of the type of carboxymethyl-cellulose, (b) polyisobutylene, and (c) an ethylene-vinyl acetate copolymer (EVA) to improve the dispersion of the hydrocolloid and the polyisobutylene. Pref. (c) an EVA 40% of vinyl acetate and an EVA with 70% of vinyl acetate are used, in respective amts. of 5-30 (15-20) wt.%, and 5-20% (5-10) of the compsn. The adhesive contains at least one tackifier, esp. 5-20% of a hydroxylated polybutadiene, 0-15% of a hydrocarbon resin and 5-10% of a mineral oil.

US2004/154216A1 (D5) describes low-molecular and high-molecular diblock emulsifiers, particularly based on polyisobutylene, of general formulas (Ia) and (Ib), and to mixtures thereof, whereby L represents a polyisobutylene group, -A- represents -O-, -N(H)- or -NR-; M⁺ represents H⁺, an alkali metal ion, 0.5 alkaline-earth metal ions or NH₄⁺; R represents a linear or branched saturated hydrocarbon radical, which supports at least one substituent selected from the group consisting of OH, NH₂ or NH₃⁺ and optionally supports one or more C(O)H groups while optionally containing one or more non-adjacent -O- and/or secondary amines and/or tertiary amines and, in the NH₂ or NH₃⁺ groups, one or more H's can be substituted by alkyl radicals, and; R¹ represents a linear or branched saturated hydrocarbon radical, which optionally supports one or more substituents selected from the group consisting of OH, NH₂, NH₃⁺ or C(O)H while optionally containing one or more non-adjacent -O- and/or secondary amines and/or tertiary amines and, in the NH₂ or NH₃⁺ groups, one or more H's can be substituted by alkyl radicals, and the proportion of A-R on the compound of general formula (Ib) equals at least 20 wt. %.

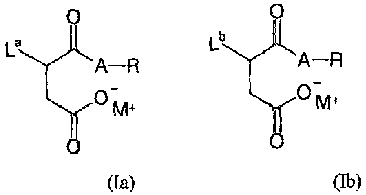

Therefore it is one goal of the present invention to provide an emulsion containing polyolefin(s) and water, which is stable.

This goal is surprisingly reached by the emulsions according to claims 1 to 8. The process of producing a stable emulsion as well as the use of such an emulsion according to claims 9 and 10 respectively form additional aspects of the present invention.

Thus the present invention is directed to an emulsion comprising
a) polyolefin(s) in an amount of from 2 to 75 mass%,
b) polymer(s) Pₓ in an amount of from 0.05 to 40 mass%, wherein the polymer(s) Px is/are selected from the group consisting of compounds of formula 1 b, 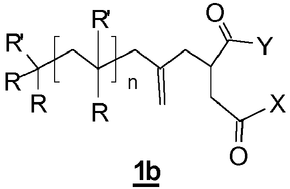 wherein
   R = H, methyl,
   R' = H, methyl,
   n = 1 to 200,
   X = OH, OR, NH₂, NHR^{#}, NR₂^{#} and their salts,
   Y = OH, OR, NH₂, NHR^{#}, NR₂^{#} and their salts,
   R^{#} = alkyl, aryl,
c) oil(s) Oₓ in an amount of from 0 to 25 mass%,
d) surfactant(s) Sₓ in an amount of from 0 to 25 mass%,
e) additive(s) Aₓ in an amount of from 0 to 20 mass% and
f) water in an amount of from 10 to 97.95 mass%,
based on the total mass of the emulsion.

The emulsion can consist of components a), b) and f), in which case the amounts add up to 100 mass%, - such an emulsion forms a preferred embodiment of the present invention. The emulsion can also contain components a), b) and f) as well as additional components. Emulsions, which in addition to components a), b) and f) also contain components c) and/or d) and/or e) form one preferred embodiment of the invention. The inventive emulsion may also contain other components.

With regard to the amounts, in which the respective compounds are present in the emulsion there exist preferred ranges. Thus an emulsion according to the invention, wherein the components independently of each other are present in amounts of:
a) polyolefin(s) in an amount of from 5 to 50 mass%,
b) polymer(s) Pₓ in an amount of from 0.5 to 30 mass%,
c) oil(s) Oₓ in an amount of from 0.1 to 25 mass%,
d) surfactant(s) Sₓ in an amount of from 0.1 to 20 mass%,
e) additive(s) Aₓ in an amount of from 0.1 to 15 mass% and
f) water in an amount of from 30 to 90 mass%,
based on the total mass of the emulsion, forms a preferred embodiment of the present invention.

Even more preferred is an emulsion, wherein the components independently of each other are present in amounts of:
a) polyolefin(s) in an amount of from 10 to 40 mass%,
b) polymer(s) Pₓ in an amount of from 0,5 to 15 mass%,
c) oil(s) Oₓ in an amount of from 5 to 20 mass%,
d) surfactant(s) Sₓ in an amount of from 0,1 to 15 mass%,
e) additive(s) Aₓ in an amount of from 1 to 10 mass% and
f) water in an amount of from 40 to 85 mass%,
based on the total mass of the emulsion.

And most preferred is an emulsion, wherein the components independently of each other are present in amounts of:
a) polyolefin(s) in an amount of from 15 to 30 mass%,
b) polymer(s) Pₓ in an amount of from 0,5 to 5 mass%,
c) oil(s) Oₓ in an amount of from 10 to 20 mass%,
d) surfactant(s) Sₓ in an amount of from 0,5 to 10 mass%,
e) additive(s) Aₓ in an amount of from 2 to 8 mass% and
f) water in an amount of from 50 to 80 mass%,
based on the total mass of the emulsion.

To maximize the content of polyolefin(s), it is advantageous to reduce the amount of other components in the emulsion. Therefore, further preferred emulsions are those, which comprise:
a) polyolefin(s) in an amount of from 15 to 35 mass%,
b) polymer(s) Pₓ in an amount of from 0,5 to 10 mass%,
c) oil(s) Oₓ in an amount of 0 mass%,
d) surfactant(s) Sₓ in an amount of from 4 to 12 mass%,
e) additive(s) Aₓ in an amount of from 0 to 10 mass% and
f) water in an amount of from 33 to 80,5 mass%,
based on the total mass of the emulsion,
a) polyolefin(s) in an amount of from 15 to 35 mass%,
b) polymer(s) Pₓ in an amount of from 0,5 to 10 mass%,
c) oil(s) Oₓ in an amount of 10 to 20 mass%,
d) surfactant(s) Sₓ in an amount of from 4 to 12 mass%,
e) additive(s) Aₓ in an amount of 0 mass% and
f) water in an amount of from 33 to 80,5 mass%,
based on the total mass of the emulsion,
a) polyolefin(s) in an amount of from 15 to 35 mass%,
b) polymer(s) Pₓ in an amount of from 0,5 to 10 mass%,
c) oil(s) Oₓ in an amount of 0 mass%,
d) surfactant(s) Sₓ in an amount of from 4 to 12 mass%,
e) additive(s) Aₓ in an amount of 0 mass% and
f) water in an amount of from 33 to 80,5 mass%,
based on the total mass of the emulsion,
a) polyolefin(s) in an amount of from 15 to 30 mass%,
b) polymer(s) Pₓ in an amount of from 0,5 to 30 mass%,
c) oil(s) Oₓ in an amount of from 10 to 20 mass%,
d) surfactant(s) Sₓ in an amount of 0 mass%,
e) additive(s) Aₓ in an amount of from 2 to 8 mass% and
f) water in an amount of from 50 to 80 mass%,
based on the total mass of the emulsion
or
a) polyolefin(s) in an amount of from 15 to 30 mass%,
b) polymer(s) Pₓ in an amount of from 0,5 to 5 mass%,
c) oil(s) Oₓ in an amount of 0 mass%,
d) surfactant(s) Sₓ in an amount of 0 mass%,
e) additive(s) Aₓ in an amount of 0 mass% and
f) water in an amount of from 50 to 80 mass%,
based on the total mass of the emulsion.

Not only the amount but also the nature of the components of the inventive emulsion can be chosen advantageously:
In general polyolefin(s) as used in the present invention is/are a chemical compound(s) consisting of carbon and hydrogen atoms. The polyolefin(s) can be linear, e.g. polyethylene, or can have side chains, e.g. polypropylene having methyl-side chains, which side chains may be that long that comb-like structures are found, or can be co- or terpolymers, e.g. ethene/propene-copolymer or ethane/propene/hexane-terpolymer. It is particularly preferred, when the polyolefin(s) is/are substantially homopolymers, i.e. the degree of co- or ter-monomer is below 10 mass%, preferably below 5 mass% based on the mass of the polymer. It is particularly preferred, if the polymer(s) is/are homopolymers, i.e. they consist of only one kind of monomer.

In particular an emulsion, wherein the polyolefin(s) a) is/are selected from the group consisting of: polyethylene, polypropylene, polybutylene and polyisobutylene is preferred. The emulsion can comprise one or more polyolefin. An emulsion, which only comprises one polyolefin a) is preferred. An emulsion, which only comprises polyisobutylene as polyolefin a) is particularly preferred. The polyolefins a) can be prepared by the usual procedures (Ullmann's Encyclopedia of Industrial Chemistry, Polyolefins, Whiteley, Heggs, Koch, Mawer, Immel, Wiley-VCH Verlag GmbH & Co. KGaA, Wein-heim 2005). The production of polyisobutylene is described e.g. in WO 02/06359 and WO 96/40808 in even more detail. The polyolefin(s) a) preferably has/have of molar mass (Mₙ) of at least 250 g/mol, preferably at least 350 g/mol and more preferred at least 500 g/mol. The polyolefin(s) a) have a maximum molar mass Mₙ of 10.000 g/mol, preferably 5000 g/mol and more preferred of 2500 g/mol. The most preferred range of the molar mass Mₙ of polyolefins a) is from 550 to 2000 g/mol.

The emulsion can comprise one or more polymers of the formula 1b. If two or more polymers are present, they can be present in equal amounts or in different amounts.

### There exist preferred compounds.

An emulsion comprising a polymer of formula 1 b wherein
R = H,
R' = H,
n = 1 to 200,
X = OH or its salts,
Y = OH or its salts,
forms a preferred embodiment of the present invention.
n is preferably in the range of from 2 to 100, more preferred in the range from 3 to 50 and most preferred in the range from 4 to 30.

An emulsion comprising a polymer of formula 1 b, wherein
R = methyl,
R' = methyl,
n = 1 to 200,
X = OR,
Y=OR,
forms another preferred embodiment of the present invention.

An emulsion comprising a polymer of formula 1 b, wherein
R = H,
R' = methyl,
n = 1 to 200,
X = OH and its salts,
Y = OH and its salts,
forms another preferred embodiment of the present invention.

An emulsion comprising a polymer of formula 1 b, wherein
R = methyl,
R' = methyl,
n = 1 to 200,
X = OH and their salts,
Y = OH and their salts,
forms another preferred embodiment of the present invention.

An emulsion comprising a polymer of formula 1 b, wherein
R = methyl,
R' = methyl,
n = 1 to 200,
X = NH₂, NHR^{#}, NR₂^{#} and their salts,
Y = O-, OH, OR and their salts,
R^{#} = alkyl, aryl
forms another preferred embodiment of the present invention.

An emulsion, wherein the oil(s) Oₓ is/are selected from the group consisting of:
c1) mineral oils, having a boiling point at atmospheric pressure of 150 °C or higher,
c2) esters of C₁₀- to C₂₆-carboxylic acid with C₈ - C₂₄-alcohols, and
c3) silicone oils forms a preferred embodiment of the present invention.

Preferred oil(s) are mineral oils available under the names mineral oil light, mineral oil heavy, paraffin liquid or Nujol, that are liquid at room temperature. One example is mineral oil available from Sigma-Aldrich Chemie GmbH, Munich, under the order number 69808.

An emulsion, wherein the surfactant(s) Sₓ is/are selected from the group consisting of: d1) nonionic surfactants,
d2) anionic surfactants and
d3) cationic surfactants is preferred.

Surfactants normally consist of a hydrophobic and a hydrophilic part. Thereby the hydrophobic part normally has a chain length of 4 to 20 C-atoms, preferably 6 to 19 C-atoms and particularly preferred 8 to 18 C-atoms. The functional unit of the hydrophobic group is generally an OH-group, whereby the alcohol can be linear or branched. The hydrophilic part generally consists substantially of alkoxylated units (e.g. ethylene oxide (EO), propylene oxide (PO) and/or butylene oxide (BO), whereby generally 2 to 30, preferably 5 to 20 of these alkoxylated units are annealed, and/or charged units such as sulfate, sulfonate, phosphate, carbonic acids, ammonium und ammonium oxide.

Examples of anionic surfactants are: carboxylates, sulfonates, sulfo fatty acid methylesters, sulfates, phosphates. Examples for cationic surfactants are: quartery ammonium compounds. Examples for betaine-surfactants are: alkyl betaines. Examples for non-ionic compounds are: alcohol alkoxylates.

A "carboxylate" is a compound, which comprises at least one carboxylate-group in the molecule. Examples of carboxylates, which can be used according to the present invention, are
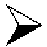 soaps - e.g. stearates, oleates, cocoates of alkali metals or of ammonium,
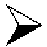 ethercarboxylates - e.g. Akypo® RO 20, Akypo® RO 50, Akypo® RO 90.

A "sulfonate" is a compound, which comprises at least one sulfonate-group in the molecule. Examples of sulfonates, which can be used according to the invention, are
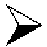 alkyl benzene sulfonates - e.g. Lutensit® A-LBS, Lutensit® A-LBN, Lutensit® A-LBA, Marlon® AS3, Maranil® DBS,
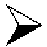 alkyl sulfonates - e.g. Alscoap OS-14P, BIO-TERGE® AS-40, BIO-TERGE® AS-40 CG, BIO-TERGE® AS-90 Beads, Calimulse® AOS-20, Calimulse® AOS-40, Calsoft® AOS-40, Colonial® AOS-40, Elfan® OS 46, Ifrapon® AOS 38, Ifrapon® AOS 38 P, Jeenate® AOS-40, Nikkol® OS-14, Norfox® ALPHA XL, POLYSTEP® A-18, Rhodacal® A-246L, Rhodacal® LSS-40/A,
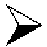 sulfonated oils such as Turkish red oil,
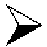 olefine sulfonates,
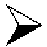 aromatic sulfonates - e.g. Nekal® BX, Dowfax® 2A1.

A "sulfo fatty acid methylester" is a compound, having the following general formula (I): 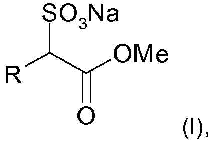 wherein R has 10 to 20 C-atoms; preferably 12 to 18 and particularly preferred 14 to 16 C-atoms.

A "sulfate" is a compound, which comprises at least one SO₄-group in the molecule. Examples of sulfates, which can be used according to the present invention, are 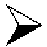
fatty acid alcohol sulfates such as coco fatty alcohol sulfate (CAS 97375-27-4) - e.g. EMAL® 10G, Dispersogen® SI, Elfan® 280, Mackol® 100N,
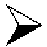 other alcohol sulfates - e.g. Emal® 71, Lanette® E,
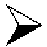 coco fatty alcohol ethersulfates - e.g. Emal® 20C, Latemul® E150, Sulfochem® ES-7, Texapon® ASV-70 Spec., Agnique SLES-229-F, Octosol 828, POLYSTEP® B-23, Unipol® 125-E, 130-E, Unipol® ES-40,
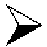 other alcohol ethersulfates - e.g. Avanel® S-150, Avanel® S 150 CG, Avanel® S 150 CG N, Witcolate® D51-51, Witcolate® D51-53.

A "phosphate" is a compound, which comprises at least one PO₄-group. Examples of phosphates, which can be used according to the present invention, are 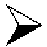
alkyl ether phosphates - e.g. Maphos® 37P, Maphos® 54P, Maphos® 37T, Maphos® 210T and Maphos® 210P,
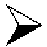 phosphates such as Lutensit A-EP,
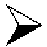 alkyl phosphates.

When producing the chemical composition of the present invention the anionic surfactants are preferably added as salts. Acceptable salts are e.g. alkali metal salts, such as sodium-, potassium- and lithium salts, and ammonium salts, such as hydroxyl ethylammonium-, di(hydroxy-ethyl)ammonium- und tri(hydroxyethyl)ammonium salts. One group of the cationic surfactants are the quartery ammonium compounds. A "quartery ammonium compound" is a compound, which comprises at least one R₄N⁺-group per molecule. Examples of counter ions, which are useful in the quartery ammonium compounds, are
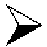 halogens, methosulfates, sulfates and carbonates of coco fat-, sebaceous fat-or cetyl/oleyltrimethylammonium.

Particularly suitable cationic surfactants are:
- N,N-dimethyl-N-(hydroxy-C₇-C₂₅-alkyl)ammonium salts;
- mono- and di-(C₇-C₂₅-alkyl)dimethylammonium compounds, which were quarternised with alkylating agents
- esterquats, especially mono-, di- and trialkanolamines, quarternary esterified by C₈-C₂₂-carbonic acids;
- imidazolinquats, especially 1-alkylimidazoliniumsalts of formula II or III 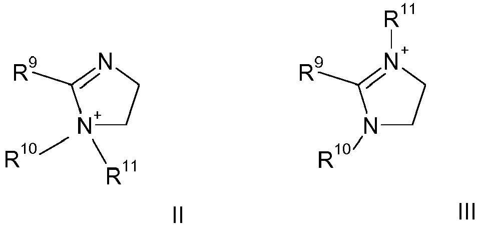 wherein the variables have the following meaning:
   R⁹ C₁-C₂₅-alkyl or C₂-C₂₅-alkenyl;
   R¹⁰ C₁-C₄-alkyl or hydroxy-C₁-C₄-alkyl;
   R¹¹ C₁-C₄-alkyl, hydroxy-C₁-C₄-alkyl or a rest R¹-(CO)-X-(CH₂)ₘ- (X:-O- or -NH-; m: 2 or 3),
   whereby at least one rest R⁹ is C₇-C₂₂-alkyl.

A "betain-surfactant" is a compound, which comprises under conditions of use - i.e. in the case of textile washing under normal pressure and at temperatures of from room temperature to 95 °C - at least one positive charge and at least one negative charge. An "alkylbetain" is a betain-surfactant, which comprises at least one alkyl-unit per molecule. Examples of betain-surfactants, which can be used according to the invention, are
Cocamidopropylbetain - e.g. MAFO® CAB, Amonyl® 380 BA, AMPHOSOL® CA, AMPHOSOL® CG, AMPHOSOL® CR, AMPHOSOL® HCG; AMPHOSOL® HCG-50, Chembetaine® C, Chembetaine® CGF, Chembetaine® CL, Dehyton® PK, Dehyton® PK 45, Emery® 6744, Empigen® BS/F, Empigen® BS/FA, Empigen® BS/P, Genagen® CAB, Lonzaine® C, Lonzaine® CO, Mirataine® BET-C-30, Mirataine® CB, Monateric® CAB, Naxaine® C, Naxaine® CO, Norfox® CAPB, Norfox® Coco Betaine, Ralufon® 414, TEGO®-Betain CKD, TEGO® Betain E KE 1, TEGO®-Betain F, TE-GO®-Betain F 50 and aminoxides such as alkyl dimethyl amineoxide, i.e. compounds of general formula (IV) 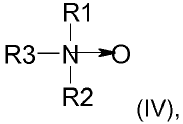 whereby R1, R2 and R3 are chosen independently from each other of an aliphatic, cyclic or tertiary alkyl- or amido alkyl-moiety, e.g. Mazox® LDA, Genaminox®, Aromox® 14 DW 970.

Non-ionic surfactants are interfacially active substances having a head group, which is an uncharged, polar, hydrophilic group, not carrying a ionic charge at neutral pH, and which head group makes the non-ionic surfactant water soluble. Such a surfactant adsorbs at interfaces and aggregates to micelles above the critical micelle concentration (cmc). According to the type of the hydrophilic head group it can be distinguished between (oligo)oxyalkylene-groups, especially (oligo)oxyethylene-groups, (polyethyleneglycol-groups), including fatty alcohol polyglycole ether (fatty alcohol alkoxylates), alkylphenol polyglycolether and fatty acid ethoxylates, alkoxylated triglycerides and mixed ethers (polyethylene glycolether alcoxylated on both sides); and carbohydrate-groups, including e.g. alkyl polyglucosides and fatty acid-*N*-methylglucamides.

Alcohol alkoxylates, are based on a hydrophobic part having a chain length of 4 to 20 C-atoms, preferably 6 to 19 C-atoms and particularly preferred 8 to 18 C-atoms, whereby the alcohol can be linear or branched, and a hydrophilic part, which can be alkoxylated units, e.g. ethylene oxide (EO), propylene oxide (PO) and/or butylene oxide (BuO), having 2 to 30 repeating units. Examples are besides others Lutensol ® XP, Lutensol ® XL, Lutensol ® ON, Lutensol ® AT, Lutensol ® A, Lutensol ® AO, Lutensol ® TO.

Alcoholphenolalkoxylates are compounds according to general formula (V), 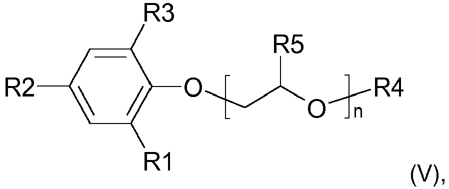 which can be produced by addition of alkylene oxide, preferably ethylene oxide onto alkyle phenoles. Preferably R4 = H. It is also preferred, if R5 = H, - since than it is EO; in the same way it is preferred if R5 = CH₃, since than it is PO, or, if R5 = CH₂CH₃ since than it is BuO. A compound is especially preferred, in which octyl- [(R1 = R3 = H, R2 = 1,1,3,3-tetramethylbutyl (diisobutylene)], nonyl- [(R1 = R3 = H, R2 = 1,3,5-trimethylhexyl (tripropylene)], dodecyl-, dinonyl- or tributylphenolpolyglycolether (e.g. EO, PO, BuO), R-C₆H₄-O-(EO/PO/BuO)n with R = C8 to C12 and n = 5 to 10, are present. Non-limiting examples of such compounds are: Norfox® OP-102, Surfonic® OP-120, T-Det® O-12.

Fatty acid ethoxilates are fatty acid esters, which have been treated with different amounts of ethylene oxide (EO).

Triglycerides are esters of the glycerols (glycerides), in which all three hydroxy-groups have been esterified using fatty acids. These can be modified by alkylene oxides.

Fatty acid alkanol amides are compounds of general formula (VI) 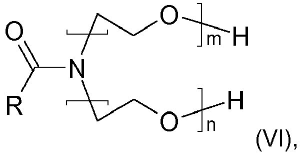 which comprise at least one amide-group having one alkyle moiety R and one or two alkoxyl-moiety(ies), whereby R comprises 11 to 17 C-atoms and 1 ≤ m + n ≤ 5.

Alkylpolyglycosides are mixtures of alkylmonoglucosides (alkyl- α-D- and - β-D-glucopyranoside plus small amounts of -glucofuranoside), alkyldiglucosides (-isomaltosides, -maltosides and others) and alkyloligoglucosides (-maltotriosides, -tetraosides and others). Alkylpolyglycosides are among other routes accessible by acid catalysed reaction (Fischer-reaction) from glucose (or starch) or from n-butylglucosides with fatty alcohols. Alkylpolyglycosides fit general formula (VII) 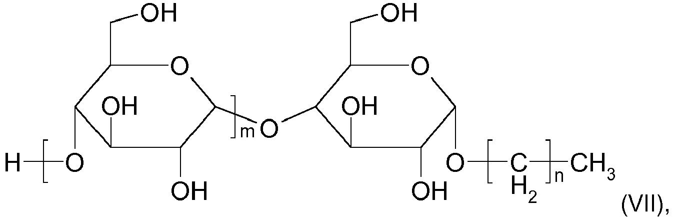 with
m = 0 to 3 and
n = 4 to 20.

One example is Lutensol ® GD70.

In the group of non-ionic *N*-alkylated, preferably *N*-methylated, fatty acid amides of general formula (VIII) 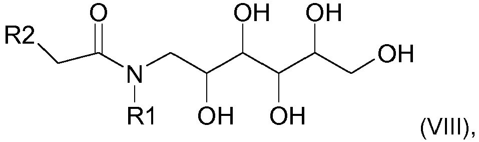 R1 is a *n*-C₁₂-alkyl-moiety, R2 an alkyl-moiety having 1 to 8 C-atoms. R2 preferably is methyl.

An emulsion, wherein the additive(s) Aₓ is/are selected from the group consisting of: disinfectant, dye, acid, base, complexing agent, biocide, hydrotope, thickener, builder, cobuilder, enzyme, bleaching agent, bleach activator, bleaching catalyst, corrosion inhibitor, dye protection additive, dye transfer inhibitor, anti-greying agent, soil-release-polymer, fiber protection agent, silicon, bactericide, preserving agent, organic solvent, solubility adjustor, solubility enhancer and perfume is preferred.

Disinfectants can be: oxidation agents, halogens such as chlorine and iodine and substances, which release the same, alcohols such as ethanol, 1-propanol and 2-propanol, aldehydes, phenoles, ethylene oxide, chlorohexidine and mecetroniummetilsulfate.

The advantage of using disinfectants is that pathogenic germs can hardly grow. Pathogenic germs can be: bacteria, spores, fungi and viruses.

Dyes can be besides others: Acid Blue 9, Acid Yellow 3, Acid Yellow 23, Acid Yellow 73, Pigment Yellow 101, Acid Green 1, Acid Green 25.

Acids are compounds that can advantageously be used to solve or to avoid scaling. Non-limiting examples of acids are formic acid, acetic acid, citric acid, hydrochloric acid, sulfuric acid and sulfonic acid.

Bases are compounds, which are useful for adjusting a preferable pH-range for complexing agents. Examples of bases, which can be used according to the present invention, are: NaOH, KOH and amine ethanol.

As inorganic builder the following are especially useful:
- crystalline and amorphous alumo silicates having ion exchanging properties, such as zeolites: different types of zeolites are useful, especially those of type A, X, B, P, MAP and HS in their Na-modification or in modifications in which Na is partially substituted by other cat ions such as Li, K, Ca, Mg or ammonium;
- crystalline silicates, such as disilicates and layer-silicates, e.g. δ- and β-Na₂Si₂O₅. The silicates can be used as alkali metal-, earth alkali metal- or ammonium salts, the Na-, Li- and Mg-silicates are preferred;
- amorphous silicates, such as sodium metasilicate and amorphous disilicate;
- carbonates and hydrogencarbonates: These can be used as alkali metal-, earth alkali metal- or ammonium salts. Na-, Li- and Mg-carbonates and -hydrogen carbonate, especially sodium carbonate and/or sodium hydrogen carbonate are preferred;
- polyphosphates, such as pentanatriumtriphosphate.

Useful as oligomeric and polymeric cobuilders are:
Oligomeric and polymeric carbonic acids, such as homopolymers of acrylic acid and aspartic acid, oligomaleic acid, copolymers of maleic acid and acrylic acid, methacrylic acid or C₂-C₂₂-olefines, e.g. isobutene or long chain α-olefines, vinyl-C₁-C₈-alkylether, vinylacetate, vinylpropionate, (meth)acryl acid ester of C₁-C₈-alcohols and styrene. Preferred are the homopolymers of acrylic acid and the copolymers of acrylic acid with maleic acid. The oligomeric and polymeric carbonic acids preferably are used as acids or as sodium salts.

Chelating agents are compounds, which can bind cat ions. They can be used to reduce water hardness and to precipitate heavy metals. Examples of complexing agents are: NTA, EDTA, MGDA, DTPA, DTPMP, IDS, HEDP, β-ADA, GLDA, citric acid, oxodisuccinic acid and butanetetracarbonic acid. The advantage of the use of these compounds lies in the fact that many compounds, which serve as cleaning agents, are more active in soft water. In addition to that scaling can be reduced or even be avoided. By using such compounds there is no need to dry a cleaned surface. This is an advantage in the work flow.

Useful anti greying agents are e.g. carboxymethylcellulose and graft polymers of vinyl acetate on polyethylene glycol.

Useful bleaching agents are e.g. adducts of hydrogenperoxide at inorganic salts, such as sodium perborate-monohydrate, sodium perborate-tetrahydrate and sodium carbonate-perhydrate, and percarbonic acids, such as phthalimidopercapronic acid.

As bleach activators compounds such as N,N,N',N'-tetraacetylethylendiamine (TAED), sodium-p-nonanoyloxybenzenesulfonate and N-methylmorpholiniumacetonitrilemethyl-sulfate are useful.

Useful enzymes are e.g. proteases, lipases, amylases, cellulases, mannanases, oxidases and peroxidases.

Useful as dye transfer inhibitors are e.g. homo-, co- and graft-polymers of 1-vinylpyrrolidone, 1-vinylimidazol or 4-vinylpyridine-N-oxide. Also homo- and copolymers of 4-vinylpyridin, which have been treated with chloro acetic acid are useful dye transfer inhibitors.

Biozides are compounds, which kill bacteria. An example of a biozide is glutaric aldehyde. The advantage of the use of biozides is that the spreading of pathogenic germs is counteracted.

Hydrotropes are compounds which enhance the solubility of the surfactant / the surfactants in the chemical composition. An example is: Cumolsulfonate.

Thickeners are compounds, which enhance the viscosity of the chemical composition. Non-limiting examples of thickeners are: polyacrylates and hydrophobically modified polyacrylates. The advantage of the use of thickeners is, that liquids having a higher viscosity have a longer residence time on the surface to be treated in the cases this surface is inclined or even vertical. This leads to an enhanced time of interaction.

An emulsion, which has a content of organic solvent below 50 mg/kg of emulsion is particularly preferred.

An emulsion according as described above, which is stable for more than 2 days according to the phase-stability-test forms a preferred embodiment of the present invention.

### Phase-stability-test:

The stability of the emulsion is tested by visual inspection via the phase-stability-test. After preparation, the emulsion is stored in a closed graduated cylinder (Hirschmann Duran 100 ml volume, NS24/29) at room temperature without agitation. After 1 h, 4 h, 24 h and 48 h, the emulsion is inspected for phase separation.
- The emulsion is defined stable when no visually observable phase separation occurs after 48 h.
- The emulsion is defined as re-emulsifiable when phase separation occurs after 48 h, but the emulsion is immediately reformed upon slight shaking or stirring with low shear, for example with a magnetic stirrer bar, and the reformed emulsion is stable again for at least four hours.
- The emulsion is defined unstable, when phase separation occurs shortly after preparation and the emulsion can not be reformed by slight shaking or stirring with low shear, for example with a magnetic stirrer bar.

A process for making an emulsion as described above, comprising the steps of: combining polyolefin(s), polymer(s) Pₓ, water and optionally oil(s) Oₓ, surfactant(s) Sₓ and additives Aₓ and homogenizing said components in a mechanical mixer without the use of a solvent forms another aspect of the present invention.

Regarding the details of the process different versions are possible.

The emulsions can be prepared by processes known in the literature, for example in Heusch, R., "Ullmann's Encyclopedia of Industrial Chemistry", Chapter "Emulsions", 1-47, Wiley-VCH, 2000 (DOI: 10.1002/14356007.a09_297) or in Kostansek, E., "Kirk-Othmer Encyclopedia of Chemical Technology", Vol. 10, 113-133, Chapter "Emulsions", John Wiley & Sons 2003 (DOI: 10.1002/0471238961.-0513211206180902.a01.pub2).

Suitable emulsifying machines are for example high-speed stirrers, agitation or impact machines, emulsifier centrifuges, colloid mills, metering pumps (atomizers), vibrators, ultrasonic generators and homogenizers.

In one preferred embodiment of the invention, the preparation of the emulsion is achieved via a solvent-free route (a solvent being a substance with a boiling point below 150 °C that can dissolve polyisobutene, for example o-xylene) by combination of the components, comprising polyisobutene, polymer(s) Pₓ, water, optionally surfactant, optionally oil and optionally further additives such as defoamers etc., and homogenization with a suitable device, like for example a high-shear mixer or for example a highpressure homogenizer, optionally at elevated temperatures.

The step of combining the components can vary: in one preferred embodiment, polymer(s) Pₓ is/are dissolved in polyisobutene, optionally comprising oil(s) and/or additional components, and then combined with the water phase, comprising water, optionally surfactant and additional components.

In another preferred embodiment, polymer(s) Pₓ is dissolved in the water phase, comprising water, optionally surfactant and/or additional components, and then combined with polyisobutene phase, comprising polyisobutene and optionally oil(s) and/or additional components.

In another preferred embodiment of the invention, the preparation of the emulsion is achieved via a solvent route. The solvent route is especially suitable to prepare emulsions with anionic polymer(s) Pₓ. The components of the emulsion, comprising polyisobutene and polymer(s) Pₓ, are dissolved in a solvent, for example o-xylene, in a stirred reactor, optionally at elevated temperatures. After complete dissolution, water is added to the solution and the mixture is distilled, optionally under addition of water steam, at elevated temperature (above 80 °C) until the solvent is removed.

The use of an emulsion as described above in chemical technical applications, cosmetics, plant protection, preparation and treatment of paper, textiles and leather, adhesives, dye and pigment formulations, coatings, pharmaceutical applications, construction, wood treatment forms another aspect of the present invention.

The present invention will be disclosed further by the following non-limiting examples:

### Examples:

### Examples 1 to 14: Preparation of components:

### Example 1 (not according to the invention):

### Preparation of terpolymer (A1):

206 g polyisobutene with molecular weight Mₙ of 550 g/mol and 185 g diisobutene were charged into a 4 I stirred vessel and heated to 110 °C under a low flow of nitrogen. After the temperature had reached 110 °C, 184 g liquid maleic anhydride (melt of approx. 70 °C) were fed into the reaction over 5 hours and 5.5g tert.-butyl peroctoate, dissolved in 25 g diisobutene (mixture of 2,4,4-trimethyl-1-pentene and 2,4,4-trimethyl-2-pentene) were fed into the reaction over 5.5 hours. The resulting terpolymer is A1.

### Example 2 (not according to the invention):

### Preparation of terpolymer (A2):

The reaction mixture of Example 1 was cooled to 90 °C and 2400 g of water and 140 g aqueous NaOH (50 wt.%) were added at the same time. The mixture was subsequently stirred for 4 hours at 90 °C and then cooled to room temperature. The resulting terpolymer (A2) was received in the form of an aqueous dispersion of pH 6.5, having a water content of 80 wt% and a K-value of 14.7.

### Example 3 (not according to the invention):

### Preparation of terpolymer (A3):

In a stirred vessel, 2350 g o-xylene, 1450 g maleic acid anhydride, 64 g polyvinyl ethyl ether (30.00 % solution in o-xylene, BASF SE, Ludwigshafen, Germany) and 1470 g polyisobutene (molecular weight 1000 g/mol) were precharged. The vessel was set under nitrogen atmosphere and the pressure was set to approx. 300 mbar. Subsequently, the temperature was set to 110 °C and the pressure was maintained at 300 mbar. Within 5.5 hours, 62.5 g tert.-butylperoctoate in 625 g o-xylene were added to the reaction mixture. 5 min after start of the feed, a second feed of 649 g isobutene was started and dosed within 5 hours. The pressure of the reaction did not exceed 1.5 bar. After the end of the feed, the reaction mixture was stirred for one hour at 110 °C. The resulting polymer A3 has a solids content of 51.3 % and a K-value of 19.5 (1 % in cyclohexanone).

### Example 4 (not according to the invention):

### Modification of terpolymer A1 (A4).

To the obtained polymer solution (of A1) in o-xylene 5.2 g of dimethylaminopropylamine in o-xylene (250 ml) were added under stirring at 90 °C over 30 min. After stirring for further 30 min the resulting polymer solution was heated to 150 °C and kept at that temperature for 4 hours. Afterwards the temperature was lowered to 30 °C and a sufficient amount of o-xylene was added to maintain an acceptable viscosity. Then dimethylsulfate (3 g in 15 ml o-xylene) was added over 30 min to the stirred polymer solution. After 30 min at 20 °C the temperature was raised to 90 °C and kept for 1 hour. 500 ml of hot water were added and a water vapor distillation was carried out until all o-xylene had been removed. This resulted in terpolymer A4.

### Example 5 (hypothetical, not according to the invention):

### Modification of terpolymer A3 (Ax):

Polymer A3 can be modified in the same way as polymer A1 in Example 4.

### Example 6 (not according to the invention):

### Preparation of maleic anhydride/C₁₂ copolymer:

In a 2 I stirred vessel 1120 g C₁₂ Olefine was added. This was heated under nitrogen to 150 °C. 736 g of maleic anhydride and a solution of 20.4 g di-tert-butylperoxid in 139 g of C₁₂ Olefin were added over 6 hours. After the addition was complete, the temperature was kept at 150 °C for another 1 hour. Afterwards the hot molten polymer was transferred into a porcelain plate. After cooling for several hours, the rigid polymer was broken to lumps and powdered.

### Example 7 (not according to the invention):

### Preparation of terpolymer A 5:

In a 2 I stirred vessel 560 g o-xylene and 399 g of maleic anhydride/C₁₂ copolymer were added. This mixture was heated to 90 °C and 7.7g dimethylaminopropylamine dissolved in 50 g o-xylene were added within 2 h at 90 °C. Afterwards the temperature was raised to 100 °C and kept at this temperature for 1 hour. Afterwards the temperature was raised to 150 °C and formed water was distilled off using a Dean Stark condenser for 4 hours. This resulted in terpolymer A5.

### Example 8 (not according to the invention):

### Modification of terpolymer A5 (A6):

500 g of terpolymer A5 were placed in a 2 I stirred vessel and cooled to 10 °C. 4.3g of dimethylsulfate were added over 30 min. The temperature was kept below 30 °C. After the addition was complete the polymer solution was stirred for 30 min at room temperature before the temperature was raised to 80 °C. The o-xylene was removed in vacuum and the resulting polymer was grinded into a powder. This resulting powder was dissolved in 862 g of deionised water and 48.6g 50%ic sodium hydroxide solution, yielding terpolymer A6.

### Example 9 (not according to the invention):

### Preparation of Terpolymer A7:

In a 2 I stirred vessel 663 g o-xylene and 240 g of powdered MSA/C₁₂-polymer were charged and heated to 90 °C. 87 g dimethylaminopropylamine were dissolved in 100 g o-xylene and were added over 2 h at 90 °C. Then the temperature was raised to 100 °C and kept there for 1 h. Then the temperature was raised to 150 °C and the water was distilled of using a Dean Stark condenser. This yielded a 28.5 %ic solution of terpolymer A7.

### Example 10 (hypothetical, not according to the invention):

Instead of dimethylaminopropylamine, also other amines such as aminopropylimidazole can be used.

### Example 11 (not according to the invention):

### Modification of terpolymer A7 (A8):

650 g of terpolymer A7 were placed in a 2 I stirred vessel and cooled to 10 °C. Over 30 min 58 g of dimethylsulfate were added and the temperature was kept under 30 °C. After the addition was complete the solution was stirred at room temperature for 15 min and then heated to 80 °C. This temperature was kept with stirring for 2 h. The solvent was removed by vacuum and the resulting polymer was dissolved in 973 g of deionized water to yield polymer A8.

### Example 12 (not according to the invention):

### Preparation of quaternized PIB-DMAPA Imide (PIBSA/DMAPA, quaternized with styrene oxide)

Polyisobutene succinic anhydride (PIBSA) (141 g, 0.1 mol) was dissolved at room temperature in tetrahydrofuran (50 g). While cooling, dimethylamino propylamine (DMAPA) (11 g, 0.1 mol) was added within 15 min. The reaction mixture was stirred for 3 hours. Subsequently, styrene oxide (13 g, 0,1 mol) was added and the temperature was increased to 50°C. After 15 h, the solvent was removed at 50 °C/1mbar. The product was formed with 95% yield.

The reaction can be performed in a similar way also in other non-polar solvents like benzene, toluene, diethylether, dichloromethane. Also other quaternization agents can be used, like dimethylsulfate, ethylene oxide, propylene oxide or methyl chloride.

### Example 13 (not according to the invention):

### Alkoxylated PIB-TEPA Imide (PIBSA/TEPA)/EO5

### 13 a) (Imide from polyisobutensuccinic acid anhydride and tetraethylene pentamine) + 1 Mol EO/ NH

In 2.5 l autoclave a reaction product from polyisobutensuccinic acid anhydride and tetraethylene pentamine (TEPA, 405 g) and water (20 g) were heated to 80°C, and purged three times with nitrogen up to a pressure of 1 bar. After the temperature had been increased to 120°C, ethylene oxide (65.2 g) was added within 20 minutes. To complete the reaction, the mixture was allowed to post-react for 10 h at 120°C. The reaction mixture was stripped with nitrogen and volatile compounds were removed in vacuo at 70°C. 485 g of a brown viscous oil were obtained.

### 13 b) (Imide from polyisobutensuccinic acid anhydride and tetraethylene pentamine) + 5 mole EO/ NH

The product obtained from Example 13 a) (158 g) and potassium-t-butylat (2.1 g) were heated to 80°C and purged three times with nitrogen up to a pressure of 1 bar. The mixture was dewatered at 120°C and a vacuum of 10 mbar for 2 h. After the vacuum had been removed with nitrogen, the temperature had been increased to 130°C and ethylene oxide (64.2 g) was added. To complete the reaction, the mixture was allowed to post-react for 10 h at 130°C. After decompression the reaction mixture was stripped with nitrogen and volatile compounds were removed in vacuo at 70°C.
215 g of a polyisobutensuccinic acid anhydride-tetraethylene-pentamine adduct with 5 mole EO/ NH were obtained as a yellow-brown highly viscous oil.

### Example 14 (not according to the invention):

### Quaternized alkoxylated PIB-TEPA Imide

### 14 a) (Imide from polyisobutensuccinic acid anhydride and tetraethylene pentamine) + 15 mole EO/NH

The product obtained from Example 14 1 a) (173 g) and potassium-t-butylat (4.0 g) were heated to 80°C and purged three times with nitrogen up to a pressure of 1 bar. The mixture was dewatered at 120°C and a vacuum of 10 mbar for 2 h. After the vacuum had been removed with nitrogen, the temperature had been increased to 130°C and ethylene oxide (247.4 g) were added within 5 hours. To complete the reaction, the mixture was allowed to post-react for 10 h at 130°C. After decompression the reaction mixture was stripped with nitrogen and volatile compounds were removed in vacuo at 70°C.

446 g of a polyisobutensuccinic acid anhydride-tetraethylene-pentamine adduct with 15.2 mole EO/NH were obtained as a yellow-brown highly viscous oil (amine value 0.89 mmol/g)

### 14 b) (Imide from polyisobutensuccinic acid anhydride and tetraethylene pentamine) + 15 mole EO/NH quaternized with dimethylsulfate

The product obtained from Example 14 a) (100.0 g) was placed in a reaction vessel at 70°C and a stream of nitrogen was bubbled through the material. Dimethyl sulfate (12.06 g) was added dropwise at 70-75°C. To complete the reaction, the mixture was stirred for 2 h at 75°C. After removal of volatile compounds in vacuo, 96 g of a brown solid (amine value 0.08 mmol/g, degree of quaternization 91.0%) were isolated.

### Examples 15 to 26: Preparation of Emulsions:

### Example 15:

### Emulsion with low non-ionic surfactant level and 20 % PIB-oil phase:

Polyisobutene (PIB) (molecular weight 1000 g/mol) (8.8 parts per weight), PIBSA (1.2 parts per weight) and mineral oil (10.0 parts per weight) were weighed into a container and heated at 80 °C for 30 minutes without stirring. Separately, nonionic surfactant C13-Oxoalcohol + 3 EO (HLB 9, 1.0 parts per weight) and nonionic surfactant C13-Oxoalcohol + 8 EO (HLB 13, 1.0 parts per weight) were added to de-ionized water (78.0 parts per weight) and heated at 80 °C for 30 minutes, after which time the aqueous mixture was added to the PIB mixture and mixed with an Ultraturrax equipped with shear-head T50 for a total of 2 minutes. The mixing speed was initially set to 5000 rpm and slowly increased to reach 10000 rpm after 2 minutes. Directly afterwards, the mixture was run 6 times through a high pressure homogenizer at 80 °C and 800 bar.

### Example 16:

### Emulsion with low non-ionic surfactant level and 35% PIB-oil phase:

Polyisobutene (PIB) (molecular weight 1000 g/mol) (15.4 parts per weight), PIBSA (2.1 parts per weight) and mineral oil (17.5 parts per weight) were weighed into a container and heated at 80 °C for 30 minutes without stirring. Separately, nonionic surfactant C13-Oxoalcohol + 3 EO (HLB 9, 1.75 parts per weight) and nonionic surfactant C13-Oxoalcohol + 8 EO (HLB 13, 1.75 parts per weight) were added to de-ionized water (61.5 parts per weight) and heated at 80 °C for 30 minutes, after which time the aqueous mixture was added to the PIB mixture and mixed with an Ultraturrax equipped with shear-head T50 for a total of 2 minutes. The mixing speed was initially set to 5000 rpm and slowly increased to reach 1000 rpm after 2 minutes. No use of high pressure homogenizer is required.

### Example 17:

### Emulsion with non-ionic surfactant and no mineral oil:

Polyisobutene (molecular weight 1000 g/mol) (28.8 parts per weight), nonionic surfactant C10-Guerbetalcohol + 4 EO (HLB 10.5, 2.6 parts per weight), nonionic surfactant C10-Guerbetalcohol + 14 EO (HLB 16, 2.6 parts per weight), and PIBSA (2.6 parts per weight) were given into a container and heated at 80 °C for 30 minutes without stirring. Afterwards the sample was mixed with an Ultraturrax equipped with shear-head T50, initially at 500 to 1000 rpm. De-ionized water, which had been preheated to 80 °C, was added drop-wise until the water content was finally 63.4 parts per weight. As more water was added the speed of the mixer was gradually increased to 5000 rpm.

### Example 18:

### Emulsion with high non-ionic surfactant level:

Polyisobutene (PIB) (molecular weight 1000 g/mol) (16.4 parts per weight) and PIBSA (1.8 parts per weight) were mixed at about 50 °C. Paraffin oil (18.2 parts per weight) was added and the mixture heated to 80 °C.
Nonionic surfactant C10-Guerbetalcohol alkoxylate (HLB 12.5, 9.1 parts per weight) was mixed with de-ionized water (54.5 parts per weight) and heated to 80 °C as well. The PIB/paraffin oil mixture was placed in a heated beaker and fitted with the Ultraturrax equipped with shear-head T25 and the speed is set to 15000 rpm. At 80 °C the mixture of water and non-ionic surfactant was added and treated at this shear rate for 120 sec without further heating.

### Example 19:

### Emulsion with low non-ionic surfactant level:

Polyisobutene (PIB) (molecular weight 1000 g/mol) (8.8 parts per weight) and PIBSA (1.2 parts per weight) were mixed at approx. 50°C. Paraffin oil (10.0 parts per weight) was added and the mixture was heated to 80 °C.
C13-Oxoalcohol + 3 EO (HLB 9, 1.0 parts per weight) and nonionic surfactant C13-Oxoalcohol + 8 EO (HLB 13, 1.0 parts per weight) were mixed with de-ionized water (78 parts per weight) and heated to 80 °C as well.
The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 20:

### Emulsion with low non-ionic surfactant level without paraffin oil:

Polyisobutene (PIB) (molecular weight 1000 g/mol) (20 parts per weight) and PIBSA (2.2 parts per weight) were mixed at about 50 °C and heated to 80 °C.
Nonionic surfactant C10-Guerbetalcohol alkoxylate (HLB 12.5, 11.2 parts per weight) is mixed with de-ionized water (66.6 parts per weight) and heated to 80 °C as well. The PIB mixture is placed in a heated beaker and fitted with the Ultraturrax equipped with shear-head T50 and the speed is set to 5000 to 6000 rpm. At 80 °C the mixture of water and non-ionic surfactant is added and treated at this shear rate for 120 sec without further heating.

### Example 21 (not according to the invention):

### Emulsion with PIBA (Polyisobuteneamine) as emulsion aid and high non-ionic surfactant level:

Polyisobutene (PIB) (molecular weight 1000 g/mol) (16.4 parts per weight) and PIBA (1.8 part per weight) were mixed at about 50 °C. Paraffin oil (18.2 parts per weight) was added and the mixture was heated to 80 °C.

Nonionic surfactant C10-Guerbetalcohol alkoxylate (HLB 12.5, 9.1 parts per weight) was mixed with de-ionized water (54.5 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 22 (not according to the invention):

### Emulsion with PIBA as emulsion aid and low non-ionic surfactant level:

Polyisobutene (PIB) (molecular weight 1000 g/mol) (17.3 parts per weight) and PIBA (1.9 parts per weight) were mixed at about 50 °C. Paraffin oil (19.2 parts per weight) was added and the mixture heated to 80 °C.

Nonionic surfactant C13-Oxoalcohol + 3 EO (HLB 9, 1.9 parts per weight) and nonionic surfactant C13-Oxoalcohol + 8 EO (HLB 13, 1.9 parts per weight) were mixed with deionized water (57.8 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 23 (not according to the invention):

### Emulsion with Ethylene/DMAEMA-wax as emulsion aid:

Polyisobutene (molecular weight 1000 g/mol) (16.4 parts per weight) and ethylene/DMAEMA wax (1.8 part per weight) were mixed at about 50 °C. Paraffin oil (18.2 parts per weight) was added and the mixture was heated to 80 °C.

Nonionic surfactant C10-Guerbetalcohol alkoxylate (HLB 12.5, 9 parts per weight) was mixed with de-ionized water (54.6 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 24 (not according to the invention):

### Emulsion with alkoxylated PIB-TEPA Imide (PIBSA/TEPA)/EO5 as emulsion aid:

Polyisobutene (PIB) (molecular weight 1000 g/mol) (16.4 parts per weight) and alkoxylated PIB-TEPA Imide (PIBSA/TEPA)/EO5 (1.9 parts per weight) were mixed at about 50 °C. Paraffin oil (18.2 parts per weight) was added and the mixture heated to 80 °C. Nonionic surfactant C10-Guerbetalcohol alkoxylate (HLB 12.5, 9.1 parts per weight) was mixed with de-ionized water (54.5 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 25 (not according to the invention):

### Emulsion with quaternized alkoxylated PIB-TEPA Imide (PIBSA/TEPA)/EO15 (91% quat. with DMS) as emulsion aid:

Polyisobutene (PIB) (molecular weight 1000 g/mol) (16.4 parts per weight) and quaternized alkoxylated PIB-TEPA Imide (PIBSA/TEPA)/EO15 (91% quat. with DMS) (1.8 parts per weight) were mixed at about 50 °C. Paraffin oil (18.2 parts per weight) was added and the mixture heated to 80 °C.
Nonionic surfactant C10-Guerbetalcohol alkoxylate (HLB 12.5, 9.1 parts per weight) was mixed with de-ionized water (54.5 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

### Example 26 (not according to the invention):

### Emulsion with quaternized PIB-DMAPA Imide (PIBSA/DMAPA, quat. with Styrene Oxide) as emulsion aid:

Polyisobutene (PIB) (molecular weight 1000 g/mol) (16.4 parts per weight) and quaternized PIB-DMAPA Imide (PIBSA/DMAPA, quat. with Styrene Oxide) (1.8 parts per weight) were mixed at about 50 °C. Paraffin oil (18.2 parts per weight) was added and the mixture heated to 80 °C.
Nonionic surfactant C10-Guerbetalcohol alkoxylate (HLB 12.5, 9.1 parts per weight) was mixed with de-ionized water (54.5 parts per weight) and heated to 80 °C as well. The PIB/paraffin oil mixture was placed in a heated beaker and fitted with the Ultraturrax equipped with shear-head T50 and the speed was set to 5000 to 6000 rpm. At 80 °C the mixture of water and non-ionic surfactant was added and treated at this shear rate for 120 sec without further heating.

## Claims

1. Emulsion comprising
a) polyolefin(s) in an amount of from 2 to 75 mass%,
b) polymer(s) Pₓ in an amount of from 0.05 to 40 mass%, wherein the polymer(s) P_{X} is/are selected from the group consisting of compounds of formula 1 b, 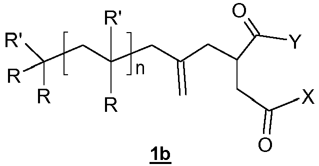 the integers being defined as
R = H, methyl,
R' = H, methyl,
n = 1 to 200,
X = O-, OH, OR, NH₂, NHR^{#}, NR₂^{#} and their salts,
Y = O-, OH, OR, NH₂, NHR^{#}, NR₂^{#} and their salts,
R^{#} = alkyl, aryl,
c) oil(s) Oₓ in an amount of from 0 to 25 mass%,
d) surfactant(s) Sₓ in an amount of from 0 to 25 mass%,
e) additive(s) Aₓ in an amount of from 0 to 20 mass%, and
f) water in an amount of from 10 to 97.95 mass%, based on the total mass of the emulsion.

2. Emulsion according to claim 1, wherein the components independently of each other are present in amounts of:
a) polyolefin(s) in an amount of from 5 to 50 mass%,
b) polymer(s) Pₓ in an amount of from 0.5 to 30 mass%,
c) oil(s) Oₓ in an amount of from 0.1 to 25 mass%,
d) surfactant(s) Sₓ in an amount of from 0.1 to 20 mass%,
e) additive(s) Aₓ in an amount of from 0.1 to 15 mass% and
f) water in an amount of from 30 to 90 mass%,
based on the total mass of the emulsion.

3. Emulsion according to claim 1 or 2, wherein the components independently of each other are present in amounts of:
a) polyolefin(s) in an amount of from 10 to 40 mass%,
b) polymer(s) Pₓ in an amount of from 0,5 to 15 mass%,
c) oil(s) Oₓ in an amount of from 5 to 20 mass%,
d) surfactant(s) Sₓ in an amount of from 0,1 to 15 mass%,
e) additive(s) Aₓ in an amount of from 1 to 10 mass% and
f) water in an amount of from 40 to 85 mass%,
based on the total mass of the emulsion.

4. Emulsion according to claim 1 to 3, wherein the components independently of each other are present in amounts of:
a) polyolefin(s) in an amount of from 15 to 30 mass%,
b) polymer(s) Pₓ in an amount of from 0,5 to 5 mass%,
c) oil(s) Oₓ in an amount of from 10 to 20 mass%,
d) surfactant(s) Sₓ in an amount of from 0,5 to 10 mass%,
e) additive(s) Aₓ in an amount of from 2 to 8 mass%, and
f) water in an amount of from 50 to 80 mass%,
based on the total mass of the emulsion.

5. Emulsion according to claim 1 to 4, wherein the polyolefin(s) is/are selected from the group consisting of: polyethylene, polypropylene, polybutylene and polyisobutylene.

6. Emulsion according to claim 1 to 5, wherein the oil(s) Oₓ is/are selected from the group consisting of:
c1) mineral oils, having a boiling point at atmospheric pressure of 150 °C or higher
c2) esters of C₁₀- to C₂₆-carboxylic acid with C₈ - C₂₄-alcohols and
c3) silicone oils.

7. Emulsion according to claim 1 to 6, wherein the surfactant(s) Sₓ is/are selected from the group consisting of:
d1) nonionic surfactants,
d2) anionic surfactants and
d3) cationic surfactants.

8. Emulsion according to claim 1 to 7, which has a content of organic solvent below 50 mg/kg of emulsion.

9. Process for making an emulsion according to claims 1 to 8, comprising the steps of:
combining polyolefin(s), polymer(s) Pₓ, water and optionally oil(s) Oₓ, surfactant(s) Sₓ and additives Aₓ and homogenizing said components in a mechanical mixer without the use of a solvent.

10. Use of an emulsion according to claims 1 to 8 in chemical technical applications, cosmetics, plant protection, preparation and treatment of paper, textiles and leather, adhesives, dye and pigment formulations, coatings, pharmaceutical applications, construction, wood treatment.

## Patentansprüche

1. Emulsion, die Folgendes umfasst:
a) Polyolefin(e) in einer Menge von 2 bis 75 Massen-%,
b) Polymer(e) Pₓ in einer Menge von 0,05 bis 40 Massen-%, wobei das Polymer/die Polymere Pₓ aus der Gruppe bestehend aus Verbindungen der Formel 1b ausgewählt ist/sind, 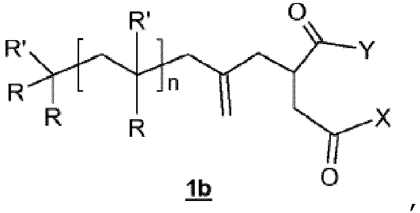 wobei die ganzen Zahlen folgendermaßen definiert sind:
R = H, Methyl,
R' = H, Methyl,
n = 1 bis 200,
X = O⁻, OH, OR, NH₂, NHR^{#}, NR₂^{#} und ihre Salze,
Y = O-, OH, OR, NH₂, NHR^{#}, NR₂^{#} und ihre Salze,
R^{#} = Alkyl, Aryl,
c) Öl (e) Oₓ in einer Menge von 0 bis 25 Massen-%,
d) Tensid(e) Sₓ in einer Menge von 0 bis 25 Massen-%,
e) Additiv(e) Aₓ in einer Menge von 0 bis 20 Massen-%, und
f) Wasser in einer Menge von 10 bis 97,95 Massen-%,
in Bezug auf die Gesamtmasse der Emulsion.

2. Emulsion nach Anspruch 1, wobei die Komponenten unabhängig voneinander in den folgenden Mengen vorliegen:
a) Polyolefin(e) in einer Menge von 5 bis 50 Massen-%;
b) Polymer (e) Pₓ in einer Menge von 0,5 bis 30 Massen-%,
c) Öl(e) Oₓ in einer Menge von 0,1 bis 25 Massen-%,
d) Tensid(e) Sₓ in einer Menge von 0,1 bis 20 Massen-%,
e) Additiv(e) Aₓ in einer Menge von 0,1 bis 15 Massen-% und
f) Wasser in einer Menge von 30 bis 90 Massen-%,
in Bezug auf die Gesamtmasse der Emulsion.

3. Emulsion nach Anspruch 1 oder 2, wobei die Komponenten unabhängig voneinander in den folgenden Mengen vorliegen:
a) Polyolefin(e) in einer Menge von 10 bis 40 Massen-%;
b) Polymer (e) Pₓ in einer Menge von 0,5 bis 15 Massen-%,
c) Öl(e) Oₓ in einer Menge von 5 bis 20 Massen-%,
d) Tensid(e) Sₓ in einer Menge von 0,1 bis 15 Massen-%,
e) Additive (e) Aₓ in einer Menge von 1 bis 10 Massen-% und
f) Wasser in einer Menge von 40 bis 85 Massen-%,
in Bezug auf die Gesamtmasse der Emulsion.

4. Emulsion nach Anspruch 1 bis 3, wobei die Komponenten unabhängig voneinander in den folgenden Mengen vorliegen:
a) Polyolefin(e) in einer Menge von 15 bis 30 Massen-%;
b) Polymer (e) Pₓ in einer Menge von 0,5 bis 5 Massen-%,
c) Öl(e) Oₓ in einer Menge von 10 bis 20 Massen-%,
d) Tensid(e) Sₓ in einer Menge von 0,5 bis 10 Massen-%,
e) Additive (e) Aₓ in einer Menge von 2 bis 8 Massen-% und
f) Wasser in einer Menge von 50 bis 80 Massen-%,
in Bezug auf die Gesamtmasse der Emulsion.

5. Emulsion nach Anspruch 1 bis 4, wobei das Polyolefin/die Polyolefine aus der Gruppe bestehend aus Polyethylen, Polypropylen, Polybutylen und Polyisobutylen ausgewählt ist/sind.

6. Emulsion nach Anspruch 1 bis 5, wobei das Öl/die Öle aus der Gruppe bestehend aus
c1) Mineralölen mit einem Siedepunkt bei Atmosphärendruck von 150°C oder höher,
c2) Estern von C₁₀- bis C₂₆-Carbonsäure mit C₈-C₂₄-Alkoholen und
c3) Silikonölen
ausgewählt ist/sind.

7. Emulsion nach Anspruch 1 bis 6, wobei das Tensid/die Tenside Sₓ aus der Gruppe bestehend aus d1) nichtionischen Tensiden,
d2) anionischen Tensiden und
d3) kationischen Tensiden
ausgewählt ist/sind.

8. Emulsion nach Anspruch 1 bis 7, die einen Gehalt an organischem Lösungsmittel von unter 50 mg/kg Emulsion aufweist.

9. Verfahren zur Herstellung einer Emulsion nach den Ansprüchen 1 bis 8, umfassend die Schritte: Zusammengeben von Polyolefin(en), Polymer(en) Pₓ, Wasser und gegebenenfalls Öl(en) Oₓ, Tensid(en) Sₓ und Additiven Aₓ, und Homogenisieren der Komponenten in einem mechanischen Mischer ohne Einsatz eines Lösungsmittels.

10. Verwendung einer Emulsion nach den Ansprüchen 1 bis 8 in chemisch-technischen Anwendungen, in Kosmetika, im Pflanzenschutz, in der Herstellung und Behandlung von Papier, Textilien und Leder, Klebstoffen, Farbstoff- und Pigmentformulierungen, Beschichtungen, pharmazeutischen Anwendungen, im Bauwesen, in der Holzbehandlung.

## Revendications

1. Emulsion, comprenant :
a) une ou plusieurs polyoléfines en une quantité de 2 à 75 % en masse,
b) un ou plusieurs polymères Pₓ en une quantité de 0,05 à 40 % en masse, le ou les polymères Pₓ étant choisis dans le groupe consistant en les composés de formule 1b, 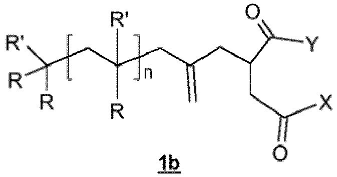 les entiers étant définis comme suit :
R = H, méthyle,
R' = H, méthyle,
n = 1 à 200,
X = O⁻, OH, OR, NH₂, NHR^{#}, NR₂^{#} et leurs sels,
Y = O⁻, OH, OR, NH₂, NHR^{#}, NR₂^{#} et leurs sels, R^{#} = alkyle, aryle,
c) une ou plusieurs huiles Oₓ en une quantité de 0 à 25 % en masse,
d) un ou plusieurs tensioactifs Sₓ en une quantité de 0 à 25 % en masse,
e) un ou plusieurs additifs Aₓ en une quantité de 0 à 20 % en masse, et
f) de l'eau en une quantité de 10 à 97,95 % en masse, par rapport à la masse totale de l'émulsion.

2. Emulsion selon la revendication 1, dans laquelle les composants sont, indépendamment les uns des autres, présents en les quantités suivantes :
a) la ou les polyoléfines en une quantité de 5 à 50 % en masse,
b) le ou les polymères Pₓ en une quantité de 0,5 à 30 % en masse,
c) la ou les huiles Oₓ en une quantité de 0,1 à 25 % en masse,
d) le ou les tensioactifs Sₓ en une quantité de 0,1 à 20 % en masse,
e) le ou les additifs Aₓ en une quantité de 0,1 à 15 % en masse, et
f) l'eau en une quantité de 30 à 90 % en masse, par rapport à la masse totale de l'émulsion.

3. Emulsion selon la revendication 1 ou 2, dans laquelle les composants sont, indépendamment les uns des autres, présents en les quantités suivantes :
a) la ou les polyoléfines en une quantité de 10 à 40 % en masse,
b) le ou les polymères Pₓ en une quantité de 0,5 à 15 % en masse,
c) la ou les huiles Oₓ en une quantité de 5 à 20 % en masse,
d) le ou les tensioactifs Sₓ en une quantité de 0,1 à 15 % en masse,
e) le ou les additifs Aₓ en une quantité de 1 à 10 % en masse, et
f) l'eau en une quantité de 40 à 85 % en masse,
par rapport à la masse totale de l'émulsion.

4. Emulsion selon les revendications 1 à 3, dans laquelle les composants sont, indépendamment les uns des autres, présents en les quantités suivantes :
a) la ou les polyoléfines en une quantité de 15 à 30 % en masse,
b) le ou les polymères Pₓ en une quantité de 0,5 à 5 % en masse,
c) la ou les huiles Oₓ en une quantité de 10 à 20 % en masse,
d) le ou les tensioactifs Sₓ en une quantité de 0,5 à 10 % en masse,
e) le ou les additifs Aₓ en une quantité de 2 à 8 % en masse, et
f) l'eau en une quantité de 50 à 80 % en masse,
par rapport à la masse totale de l'émulsion.

5. Emulsion selon les revendications 1 à 4, dans laquelle la ou les polyoléfines sont choisies dans le groupe consistant en le polyéthylène, le polypropylène, le polybutylène et le polyisobutylène.

6. Emulsion selon les revendications 1 à 5, dans laquelle la ou les huiles Oₓ sont choisies dans le groupe consistant en :
c1) les huiles minérales ayant un point d'ébullition sous la pression atmosphérique de 150°C ou plus,
c2) les esters d'un acide carboxylique en C₁₀ à C₂₆ et d'un alcool en C₈ à C₂₄, et
c3) les huiles de silicone.

7. Emulsion selon les revendications 1 à 6, dans laquelle le ou les tensioactifs Sₓ sont choisis dans le groupe consistant en :
d1) les tensioactifs non ioniques,
d2) les tensioactifs anioniques, et
d3) les tensioactifs cationiques.

8. Emulsion selon les revendications 1 à 7, qui a une teneur en solvant organique inférieure à 50 mg/kg d'émulsion.

9. Procédé de fabrication d'une émulsion selon les revendications 1 à 8, comprenant les étapes de combinaison de la ou des polyoléfines, du ou des polymères Pₓ, de l'eau et en option de la ou des huiles Oₓ, du ou des tensioactifs Sₓ ou des additifs Aₓ, et d'homogénéisation desdits composants dans un mélangeur mécanique sans utilisation d'un solvant.

10. Utilisation d'une émulsion selon les revendications 1 à 8 dans les applications techniques chimiques, les produits cosmétiques, la protection des plantes, la préparation et le traitement du papier, des textiles et du cuir, les adhésifs, les formulations colorantes et pigmentaires, les revêtements, les applications pharmaceutiques, la construction, le traitement du bois.
